(19) Europäisches Patentamt
European Patent Office
Office européen des brevets

(11) **EP 0 938 591 B1**

(12) **EUROPÄISCHE PATENTSCHRIFT**

(45) Veröffentlichungstag und Bekanntmachung des Hinweises auf die Patenterteilung:
**07.11.2007 Patentblatt 2007/45**

(21) Anmeldenummer: **98941140.0**

(22) Anmeldetag: **08.09.1998**

(51) Int Cl.:
**C21C 5/36** *(2006.01)*  **C22B 7/04** *(2006.01)*

(86) Internationale Anmeldenummer:
**PCT/AT1998/000210**

(87) Internationale Veröffentlichungsnummer:
**WO 1999/014381 (25.03.1999 Gazette 1999/12)**

(54) **VERFAHREN ZUM AUFARBEITEN VON STAHLSCHLACKEN UND EISENTRÄGERN ZUR GEWINNUNG VON ROHEISEN UND UMWELTVERTRÄGLICHEN SCHLACKEN**

STEEL SLAG AND FERRIFEROUS MATERIAL REPROCESSING PROCESS USEFUL TO PRODUCE PIG IRON AND ENVIRONMENTALLY COMPATIBLE SLAGS

PROCEDE DE RETRAITEMENT DE LAITIERS D'ACIER ET DE MATERIAUX FERRIFERES POUR L'OBTENTION DE FONTE BRUTE ET DE LAITIERS NON-POLLUANTS

(84) Benannte Vertragsstaaten:
**AT BE CH DE FR GB IT LI LU NL SE**
Benannte Erstreckungsstaaten:
**SI**

(30) Priorität: **15.09.1997 AT 154697**
**05.03.1998 AT 13198**

(43) Veröffentlichungstag der Anmeldung:
**01.09.1999 Patentblatt 1999/35**

(73) Patentinhaber: **Holcim Ltd.**
**8645 Jona (CH)**

(72) Erfinder: **EDLINGER, Alfred**
**CH-5400 Baden (CH)**

(74) Vertreter: **Haffner, Thomas M.**
**Haffner und Keschmann**
**Patentanwälte OG**
**Schottengasse 3a**
**1014 Wien (AT)**

(56) Entgegenhaltungen:
**EP-A- 0 313 547**   **WO-A-95/07365**
**US-A- 4 725 307**   **US-A- 5 556 457**

**Beschreibung**

Die Erfindung bezieht sich auf ein Verfahren zum Aufarbeiten von Stahlschlacken und Eisenträgern, wie z.B. Elektroofen-, Konverter-Schlacken, Feinerzen, Stäuben aus der Stahlherstellung, Walzwerkzunder zur Gewinnung von Roheisen und umweltverträglichen Schlacken.

Aus der PCT/AT 96/00019 ist ein Verfahren zur Herstellung von Roheisen oder Stahl und Zementklinker aus Schlacken bekanntgeworden, bei welchem eisenoxidhältige flüssige Schlacken, wie beispielsweise Stahlwerksschlacke, mit Eisenoxidträger und Kalk vermischt wurde, worauf eine Ferritschlacke gebildet wurde. Diese Ferritschlacke wurde anschließend in einem Reduktionsreaktor unter Ausbildung eines Eisenbades und einer Sinterphase unter Verbrennung von Kohlenstoffreduzierung, worauf die Sinterphase als Klinker ausgebracht wurde.

Schlacken weisen eine relativ geringe Wärmeleitfähigkeit und eine gegenüber Eisen etwa 1,5 bis 2fache Wärmekapazität auf. Wesentlich für die Wirtschaftlichkeit eines derartigen Verfahrens ist die erzielbare Wärmeübertragung bzw. der sogenannte Nachverbrennungsgrad. Der Nachverbrennungsgrad ist hiebei wie folgt definiert:

$$\text{Nachverbrennungsgrad} = \frac{CO_2 + H_2O}{CO + CO_2 + H_2 + H_2O} \text{ Gasphase}$$

Mit den bekannten Verfahrensweisen wurde bisher ein nur unzureichender Nachverbrennungsgrad sichergestellt. Auch die

$$\text{Wärmeübertragung} = 1 - \frac{H_g - H_b}{H_{pc}}$$

$H_g$   Enthalpie des Gases (bei Gastemperatur)
$H_b$   Enthalpie des Gases (bei Schmelz-Temperatur)
$H_{pc}$   Verbrennungs-Enthalpie (bei Schmelz-Temperatur)

ist bei den bekannten Verfahrensweisen für eine wirtschaftliche Verfahrensweise nicht ausreichend.

Thermische Wirkungsgrade von weit über 70 % werden weder bei konventionellen Hochofentechnologien, noch bei anderen Verfahren, wie beispielsweise Wirbelschichtverfahren erzielt. So ist es bereits bekannt, vorreduzierte und zumindest teilweise vorgewärmte Chargen gemeinsam mit Kohle in einer Wirbelschicht einzublasen, wobei unter Reduktion der Charge Kohle in einer Wirbelschicht vergast wird und Schwammeisen eingeschmolzen und abgezogen wird. Derartige Einschmelzvergasungsreaktionen sind zu allem Überfluß in der Regel auf das gewünschte Roheisenausbringen optimiert, sodaß eine umweltverträgliche Schlacke nicht gebildet wird.

Die vorliegende Erfindung zielt nun darauf ab, ein Verfahren der eingangs genannten Art zu schaffen, mit welchem die Wärmeausbeute und damit der Wirkungsgrad wesentlich gegenüber bekannten Verfahren erhöht werden. Diese Aufgabe wird durch das Verfahren gemäß Anspruch 1 gelöst. Dadurch, daß eine überaus hohe und gegenüber bekannten Verfahren wesentlich erhöhte spezifische Schlackenmenge eingesetzt wird, kann Schlacke die Funktion eines Wärmeübertragungsmediums vom Gasraum auf das Schlackeeisenschmelzgemisch übernehmen. Die 1,5 bis 2fache Wärmekapazität der Schlacke gegenüber Eisen erlaubt hiebei eine hohe Wärmeübertragung, wobei durch entsprechend hohen Eisenbadanteil ein Durchblasen von Kohlen und damit eine zu geringe Austauschfläche zwischen dem Reduktionsmittelträger Eisenbad und dem Oxidträger Schlacke vermieden wird. Dadurch, daß erfindungsgemäß den Schlacken $SiO_2$-Träger zur Einstellung einer definierten Schlackenbasizität von 1 bis 1,8 und besonders bevorzugt zwischen 1,2 und 1,8 zugesetzt wird, gelingt es unmittelbar umweltverträgliche Schlacken herzustellen, wobei die unmittelbare Verwendbarkeit derartiger umweltverträglicher Schlacken noch dadurch verbessert werden kann, daß der $Al_2O_3$-Gehalt auf Werte zwischen 10 und 25 Gew.%, bezogen auf die Schlacke, eingestellt wird.

Dadurch, daß Heißwind aufgeblasen wird, wird die Wärmeübertragung weiter erhöht, wobei das Aufblasen des Heißwindes gemeinsam mit dem Hineinblasen von Kohle und $N_2$ und getrennt Sauerstoff in das Eisenbad eine intensive Durchmischung der Schlacke und des Eisenbades und damit einen erhöhten Wärmeübergang in der durch intensive Durchmischung gebildeten Suspension von Schlacke und Eisenbad ermöglicht.

Um die Gefahr von Durchbläsern definitiv zu verhindern, wird mit Vorteil so vorgegangen, daß die Schmelzbadhöhe wenigstens dem 20fachen, vorzugsweise dem 30 bis 60fachen, der Unterbaddüsendurchmesser entspricht.

Auf diese Weise wird gleichzeitig eine entsprechende Durchwirbelung um die Ausbildung einer Schlacke-Eisenbadsuspension begünstigt, wodurch der Wärmeübergang in der flüssigen Phase verbessert wird.

Die Wärmeübertragung kann durch den Aufprallimpuls des Heißwindstrahles weiter verbessert werden, wobei ein derartiger Aufprallimpuls die intensive Durchmischung von Schlackenbad und Eisenbad weiter verbessert. Mit Vorteil wird hiebei so vorgegangen, daß die Heißwindgeschwindigkeit zwischen 0,4 und 0,8 Mach gewählt wird.

Ein besonders gut verwertbares umweltverträgliches Schlackenprodukt kann im Rahmen des erfindungsgemäßen Verfahrens dadurch hergestellt werden, daß die Schlacken unter Ausbildung eines Glasgehaltes von mehr als 90 %, vorzugsweise mehr als 93 % granuliert werden.

Zusätzlich zur Wahl einer optimalen Heißwindgeschwindigkeit kann die Wärmeübertragung noch dadurch verbessert werden, daß die spezifische Badoberfläche vergrößert wird. Eine derartige Vergrößerung der spezifischen Badoberfläche kann beispielsweise durch Tröpfchenflug in den Gasraum des Konverters unter Einsatz von Hochdruckunterbaddüsen bewirkt werden, wodurch eine Badoberflächenvergrößerung um einen Faktor 20 gegenüber einer ruhigen Schlackenschmelze erzielt werden kann. Eben dies gelingt durch die Dimensionierung der Schmelzbadhöhe relativ zum Unterbaddüsendurchmesser.

Im Gegensatz zu üblichen Hochofenprozessen und konventionellen Stahl- oder Roheisengewinnungsprozessen, welche auf möglichst geringe spezifische Schlackenmengen abstellen, lassen sich mit dem erfindungsgemäßen Verfahren in besonders vorteilhafter Weise auch eine Reihe von bisher schwer verwertbaren Eisenträgern in besonders energetisch günstiger Weise und damit wirtschaftlicher Weise zu Roheisen umsetzen. Dies gilt in hohem Maße für Feinerze, deren wirtschaftliche Aufarbeitung bisher kaum gelingt. Auch Stäube aus der Stahlherstellung, welche neben hohen Eisengehalten auch relativ hohe Schwermetallgehalte aufweisen, lassen sich im Rahmen des erfindungsgemäßen Verfahrens ohne weiteres verwerten. Dies gilt naturgemäß auch für Walzwerkzunder, wobei bei konventioneller Verwertung teilweise größere Probleme aufgrund von anhaftenden Ölen aufweisen, welche im Rahmen des erfindungsgemäßen Verfahrens keine Schwierigkeiten machen. (Zugabe durch Zentralrohr der Heißwind-Lanze)

Das erfindungsgemäße Verfahren ist in erster Linie für Elektrostahlwerke von besonders hoher Bedeutung, da diese über keine Roheisentechnologie und insbesondere keine Hochofentechnologie verfügen. Elektrostahlwerke müssen in der Regel Roheisen relativ teuer zukaufen, wenn höherwertige Produkte hergestellt werden sollen. Dies gilt vor allen Dingen dann, wenn durch Verdünnung der Kupfer- und Zinngehalt, welcher durch Schrottstahl in einen Elektroofen eingeschleppt wird, herabgesetzt werden soll. Neben der günstigen Verwertung und Entsorgung von Hüttenreststoffen, wie Elektroofenschlacke und Stäuben, Zunder sowie gegebenenfalls Gießereisand, lassen sich auch aluminium(oxid)-haltige Schleifstäube sowie getrocknete Rotschlämme, welche bei der Bauxitgewinnung des Bayer-Verfahrens anfallen, und andere schwierig zu entsorgende Reststoffquellen in besonders vorteilhafter Weise im Rahmen des erfindungsgemäßen Verfahrens einsetzen.

Mit Vorteil wird das erfindungsgemäße Verfahren so durchgeführt, daß Kohle in einer Menge von 60 bis 350 kg/t Schlacke gemeinsam mit 6 bis 9 $Nm^3$/t Schlacke Stickstoff als Trägergas sowie 25 bis 100 $Nm^3$/t Schlacke Sauerstoff gegebenenfalls gemeinsam mit Kohlenwasserstoffen zum Schutz der Düsen durch das Bad hindurchgeleitet werden, wodurch eine besonders gute Wirtschaftlichkeit erreicht wird.

Zur Erzielung einer möglichst intensiven Durchmischung von Schlacke und Eisenbad, beispielsweise in Form einer Schlacke- und Eisenbadsuspension, wird das erfindungsgemäße Verfahren mit Vorteil so durchgeführt, daß die Gase unter einem Druck von 5 bis 10 bar zugeführt werden, wobei $N_2$ mit höherem Druck, insbesondere 7 bis 10 bar als $O_2$ und Kohlenwasserstoffe, wie z.B. Erdgas, eingesetzt wird. Eine besonders hohe Energieausbeute durch die Verwendung von Heißwind läßt sich dadurch erzielen, daß Heißwind unter einem Druck von 0,8 bis 1,2 bar in Mengen von 400 bis 1200 $Nm^3$/t Schlacke über Lanzen aufgeblasen wird.

Mit Vorteil wird das Verfahren so geführt, daß die Konverterabgastemperatur auf 1600 bis 1800° C, vorzugsweise 1650° bis 1750° C, geregelt wird.

Mit dem erfindungsgemäßen Verfahren lassen sich umweltkompatible Schlacken, insbesondere mit einem CaO zu $SiO_2$-Verhältnis von 1,3 bis 1,6 und $Al_2O_3$-Gehalt von 10 bis 20 Gew.% bei einem Glasgehalt von größer als 93 % herstellen, welche in Form von Mischzement oder als klinkerfreier Sulfathüttenzement eingesetzt werden können. Das mit dem erfindungsgemäßen Verfahren herstellbare Roheisen entspricht in der Spezifikation konventionellen Hochofenroheisen mit tendentiell etwas geringeren Siliziumgehalten. Mit Vorteil werden Feinerze in Mengen von 200 bis 1500 kg/t Stahlschlacke aufgegeben, wodurch eine entsprechende Cu und Sn Verdünnung bei entsprechend begrenztem Abgasvolumen erzielt wird und eine wirtschaftliche Verwertung von Feinerzen ermöglicht wird.

Bei der Durchführung des erfindungsgemäßen Verfahrens sind einige Parameter besonders bedeutungsvoll, welche für die Verarbeitbarkeit bzw. das Handling der Schlacken zu berücksichtigen sind. Insbesondere gilt, daß dann, wenn in einem Konverter, in welchem ein Metallbad vorgelegt ist, Schlacken eingebracht werden, welche im Falle von Stahlschlacken in der Regel eine Basizität von etwa 3 aufweist, durch das Einbringen von sauren $SiO_2$-Trägern die Zielgröße von 1 bis 1,8 und bevorzugt etwa 1,5 eingestellt werden soll. Eine derartige Veränderung der Schlackenbasizität muß naturgemäß von der Auskleidung des Konverters ohne drastische Verringerung der Standzeit beherrscht werden, wobei gleichzeitig zu berücksichtigen ist, daß durch die Absenkung der Schlackenbasizität die Schlackenviskosität wesentlich verändert werden kann. Durch sinkende Basizität wird die Schlacke bei tieferen Temperaturen schmelzflüssig, was sich wiederum auf das Handling der Schlacken auswirkt, sodaß es insbesondere vorteilhaft erscheinen kann, die Schlackenbasizität entweder stufenweise oder bereits vor dem Einbringen in den Konverter in dem gewünschten Maße abzusenken. Während somit das Einblasen von Feinerzen prinzipiell auch über Bodendüsen und durch das Metallbad hindurch erfolgen könnte, ist es unter Berücksichtigung der obigen Überlegungen vorteilhafter, saure Bestandteile, wie beispielsweise Feinerze, Hüttensande oder Gießereisande, bereits zuvor aufzuschmelzen und in einer gesonderten Pfanne mit der Stahlschlacke zu vermischen. Gemäß einer bevorzugten Weiterbildung des erfindungsgemäßen Verfahrens wird dieses daher so durchgeführt, daß die Schlackenbasizität der Stahlschlacke in einer dem Konverter mit dem Metallbad vorgeschalteten Pfanne abgesenkt wird.

Um die Vermischung von sauren Zusätzen und insbesondere $SiO_2$-Trägern mit den Stahlschlacken besonders effizient durchführen zu können, ist es vorteilhaft, diese Produkte weitestgehend vorzuwärmen oder sogar zu schmelzen. Zwar erfolgt beim Vermischen aufgrund der Neutralisationsreaktion eine weitere Erwärmung, wobei diese Erwärmung aber insbesondere dazu genützt werden kann, in der vorgeschalteten Pfanne auf eine zusätzliche Beheizung, insbesondere eine elektrische Beheizung, zu verzichten. Mit Vorteil wird das erfindungsgemäße Verfahren daher so durchgeführt, daß die für die Absenkung der Basizität erforderlichen $SiO_2$-Träger, wie z.B. Gießereisanede, Hüttensande und/oder Feinerze, in einem Schmelzzyklon mit den Konverterabgasen unter gleichzeitiger Reinigung der Konverterabgase erhitzt werden. Die Verwendung eines Schmelzzyklones hat hiebei nicht nur den Vorteil, daß die fühlbare Wärme der Konverterabgase effizient genutzt werden kann, sondern gleichzeitig den Vorteil, daß die Konverterabgase einer wirkungsvollen Reinigung unterworfen werden können, wodurch die den Schmelzzyklon verlassenden gereinigten Abgase unmittelbar über Wärmetauscher oder Regenerativwärmetauscher geführt werden können. In einem derartigen Schmelzzyklon kann aber auch, wie es einer weiteren bevorzugten Ausbildung entspricht, der CO- und ggf. $H_2$-Gehalt der Konverterabgase zusätzlich verbrannt werden, wodurch auch die chemische Wärme restlos genutzt werden kann.

Um nun sicherzustellen, daß die eingebrachcen $SiO_2$-Träger und insbesondere Gießereisande oder Hüttensande bei den im Schmelzzyklon erzielbaren Temperaturen aufschmelzen, können mit Vorteil Eisenoxidträger, wie beispielsweise Feinerze zugesetzt werden. Insgesamt können aber auch Feinerze bei entsprechender chemischer Zusammensetzung als alleinige $SiO_2$-Träger zum Einsatz gelangen. Mit Vorteil wird das erfindungsgemäße Verfahren so durchgeführt, daß dem Schmelzzyklon mit den $SiO_2$-Trägern Feinerze bzw. $Fe_xO_y$-Träger zur Ausbildung fayalitischer Schlacken zugesetzt werden und die gebildete Schmelze mit der Schlackenschmelze vor Aufgabe in den Konverter vermischt wird. Fayalitische Schlacken weisen zum Unterschied von Quarzsanden, welche Schmelztemperaturen von etwa 2000° C aufweisen, Schmelztemperaturen von lediglich 1200° bis 1250° C auf, wodurch sichergestellt wird, daß mit der Konverterabgastemperatur eine Schmelze erzielt wird. Eine derartige Schmelze, welche gleichzeitig die Stäube der Konverterabgase effizient einbindet, läßt sich in der Folge in einer Pfanne rasch mit der Stahlschlackenschmelze vermischen, sodaß die Verweilzeit in der Pfanne und damit die Belastung der Pfanne gering gehalten werden kann.

Einem derartigen Schmelzzyklon können mit Vorteil auch $Al_2O_3$-Träger, wie Bauxit, und/oder Hüttenstäube aufgegeben werden. Prinzipiell lassen sich $Al_2O_3$-Träger allerdings auch ohne nennenswerte Belastung der Auskleidung des nachgeschalteten Konverters unmittelbar in den Konverter einblasen, sofern sie in einer entsprechend pneumatisch förderbaren Form vorliegen.

Wenn im Rahmen des Einsatzes von Stahlschlacken Edelstahlschlacken zum Einsatz gelangen, ist in der Regel auch ein entsprechender Chromgehalt zu berücksichtigen. Um unmittelbar einsetzbare Schlacken zu erzielen, muß sichergestellt werden, daß ein derartiger Chromgehalt im Metallbad verbleibt und es muß daher eine Entphosphorung des Metallbades bevorzugt unter reduzierenden Bedingungen geführt werden. Mit Vorteil wird zu diesem Zwecke so vorgegangen, daß das Metallbad des Konverters abgezogen und gesondert unter reduzierenden Bedingungen mittels CaO, $CaC_2$, metallischem Magnesium, metallischem Kalzium und/oder $CaF_2$ entphosphort wird.

Für die Durchführung des erfindungsgemäßen Verfahrens werden mit Vorteil die nachfolgenden technischen Parameter eingehalten.

Technische Parameter

Unterbad-Düsen (Regelbereich):

| | | | |
|---|---|---|---|
| Kohle | 60 | - | 350 kg/$t_{Schlacke}$ |
| Sauerstoff | 25 | - | 100 Nm$^3$/$t_{Schlacke}$ |
| Stickstoff (Trägergas für Kohle) Erdgas (Düsenschutzgas für | 6 | - | 9 Nm$^3$/$t_{Schlacke}$ |
| Sauerstoff-Eintrag) | 7 | - | 10 Nm$^3$/$t_{Schlacke}$ |
| Sauerstoff und Erdgas | 5 | - | 8 bar |

(fortgesetzt)

| Stickstoff | 7 | - | 10 bar |
|---|---|---|---|

Heißwind-Lanze (Regelbereich):

| Vordruck Heißwind-Lanze | 0,8 | - | 1,2 bar |
|---|---|---|---|
| Heißwind | 400 | - | 1200 $Nm^3/t_{Schlacke}$ |

Konverter-Abgas:

| Temperatur | 1650 | - | 1750° C |
|---|---|---|---|
| Zusammensetzung | 50 | - | 55 % $N_2$ |
| | 7 | - | 20 % CO |
| | 18 | - | 25 % $CO_2$ |
| | 0,5 | - | 5 % $H_2$ |
| | 7 | - | 12 % $H_2O$ |
| Menge | 400 | - | 1200 $Nm^3/t_{Schlacke}$ |

Als Einsatzstoff für das erfindungsgemäße Verfahren wurden im Rahmen eines Ausführungsbeispieles folgende Materialien eingesetzt:

Einsatzstoffe

| Kohle (z.B.Zentralkokerei Saar, DIN 23003) | |
|---|---|
| LOI | 19 (%) |
| Asche | 8 (%) |

| Kohle-Ascheanalyse (%) | |
|---|---|
| $SiO_2$ | 52 |
| $Al_2O_3$ | 25 |
| $TiO_2$ | 1 |
| $Fe_2O_3$ | 10 |
| CaO | 8 |

| OBM-Schlacke (NMH) (%) | |
|---|---|
| P205 | 1,5 |
| CaO | 48 |
| MnO | 3 |
| A1203 | 4 |
| Fe (FeO) | 15 (22) |
| Fe, met | 8 |

(fortgesetzt)

| OBM-Schlacke (NMH) (%) | |
|---|---|
| $Cr_2O_3$ | 1 |
| MgO | 3 |
| $SiO_2$ | 15,4 |
| $TiO_2$ | 1 |

| Eisenerz (%) | |
|---|---|
| LOI | 3,2 |
| $SiO_2$ | 2,5 |
| $Al_2O_3$ | 1,5 |
| $P_2O_5$ | 0,1 |
| CaO | 0,1 |
| $Fe_2O_3$ | 92 |
| MgO | 0,03 |
| $SO_3$ | 0,03 |

| Bauxit (%) | |
|---|---|
| $Al_2O_3$ | 95 |

| Sand (%) | |
|---|---|
| $SiO_2$ | 98 |

Stahlschlacken, welche in bodenblasenden Konvertern hergestellt wurden, weisen in der Regel geringere FeO und metallisierte Eisenanteile auf als beispielsweise LD- oder Elektroofenschlacken. Die Wirtschaftlichkeit des erfindungsgemäßen Verfahrens konnte durch Zugaben von $SiO_2$- und $Al_2O_3$-Additiven, wie Gießereisanden, Schleifstäuben aus der Automobilindustrie bzw. Motorenfertigung od.dgl. und Zugabe von Eisenträgern, wie Feinerze, Konverterstäuben, Walzwerkzunder sowie unter Verwendung von gegebenenfalls dioxinbelastetem Aktivkoks über die Unterbad-düsen erhöht werden. Dem Konverter wurden 580 kg Stahlwerksschlacke, 280 kg Eisenerz, 60 kg Bauxit und 80 kg Sand aufgegeben, wobei der Konverter mit 185 kg Kohle, 48 $Nm^3$ Sauerstoff und 670 $Nm^3$ Heißwind betrieben wurde. Es konnte eine Ausbeute von 313 kg Roheisen und 615 kg einer umweltverträglichen Schlacke gewonnen werden.

Die Abstichtemperaturen der erzeugten Schlacke und des Roheisens wurden mit 1500° C gewählt. Die Eingangstemperatur der Schlacke lag bei 1400° C.

Feinerz wurde mittels Sauerstoffunterbaddüsen eingeblasen, wodurch das eingeblasene Eisenerz unmittelbar mit dem reduzierenden Eisenbad in Berührung kam und damit metallisiert wurde. Ein derartiges Eintragen von Eisenerz über Bodendüsen hat gegenüber einer Aufgabe des Feinerzes von oben unter Verwendung von Blaslanzen den Vorteil, daß die Staubentwicklung wesentlich verringert wird und damit der entsprechende Austrag bzw. Auswurf aus dem Konverter verringert wird.

Feinerz läßt sich mit der erfindungsgemäßen Einblasung in das Bad sofort metallisieren, ohne daß es sich zuvor in der Schlacke aufgelöst hat. Auf diese Weise wird die Standzeit der Feuerfestzustellung wesentlich verbessert.

Das Einblasen von Sauerstoff und Kohlenstoff oder anderen Zusätzen über gesonderte Unterbaddüsensysteme in das Bad hat sich als unproblematisch erwiesen, da allenfalls zweiwertiges Eisen im Eisenerz nicht aufoxidiert wurde. Bauxit, Sande und Feinerze können hiebei gemeinsam mit Sauerstoff ein- oder aufgeblasen werden. Kohle, insbesondere Gemische aus gleichen Teilen Flammkohle und Anthrazit, kann mit Inertgas, wie z.B. Stickstoff, durch das Bad eingeblasen werden.

Im Rahmen des erfindungsgemäßen Verfahrens konnten bis zu 15 bis 30 kg Eisenerz mit einer Körnung von kleiner 5 mm/$Nm^3$ Sauerstoff gefördert werden. Insgesamt lassen sich im Rahmen des erfindungsgemäßen Verfahrens mittels Sauerstoff sowohl die erforderliche Menge Erz als auch die erforderliche Menge Bauxit und Sand sowie Additive über die Baddüsen in den Konverter einbringen. Wenn zusätzlich schlecht pneumatisch förderbares Aufgabegut, wie beispielsweise Additive oder Erz, zugegeben werden sollen, kann dies über das Zentralrohr der Heißluftlanze bzw. über eine Schurre direkt in den Konvertermund geschehen.

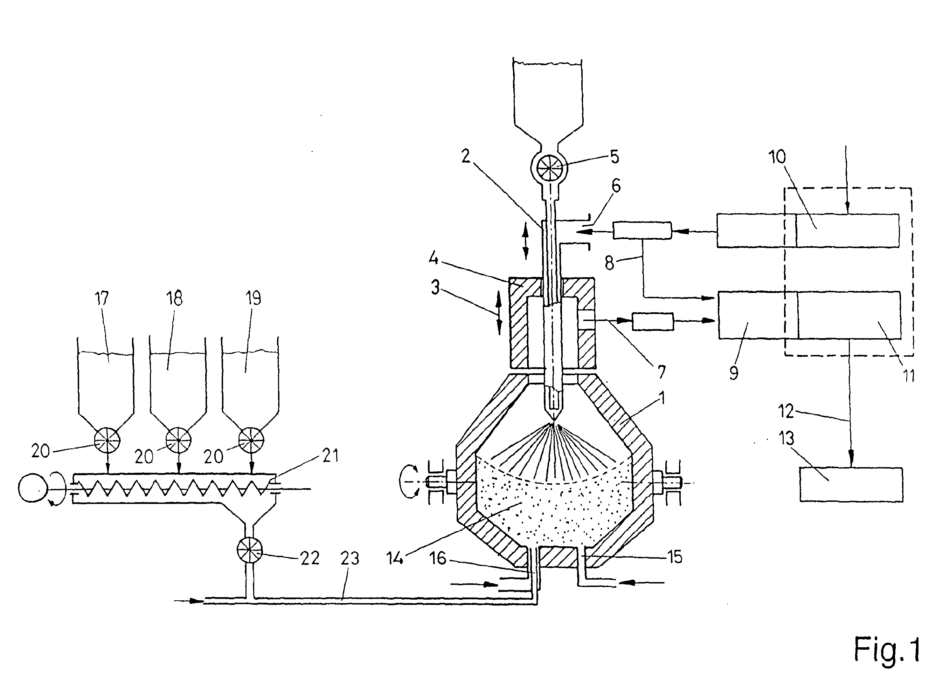

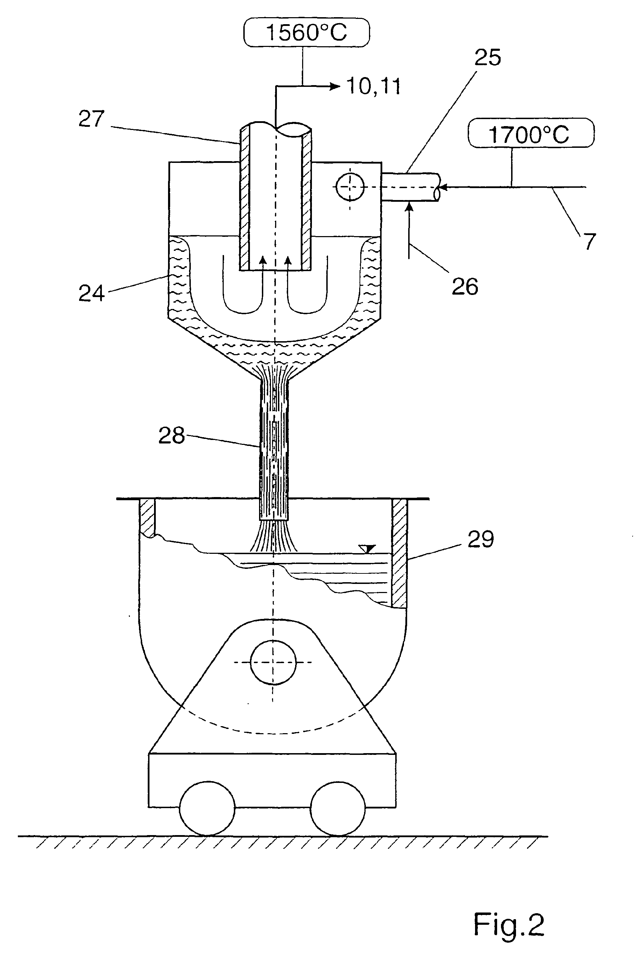

Eine für die Durchführung des erfindungsgemäßen Verfahrens besonders bevorzugte Vorrichtung ist in Fig. 1 dargestellt, Fig. 2 zeigt eine abgewandelte Einrichtung zur Aufgabe von $SiO_2$-Trägern.

In Fig. 1 ist mit 1 ein kippbarer Konverter bezeichnet. Eine Heißwindlanze 2 durchsetzt einen in vertikaler Richtung im Sinne des Doppelpfeiles 3 verstellbaren Stellring 4, sodaß die geeignete Lanzenposition erzielt werden kann. Über die Heißwindlanze kann relativ kostengünstige thermische Kohle über eine Zellradschleuse 5 aufgegeben werden, wobei der Heißwind an den Anschluß 6 der Lanze angeschlossen ist.

Die Wirtschaftlichkeit des Verfahrens kann durch Verwendung geeigneter Wärmetausch- und Wärmeregenerationsverfahren verbessert werden. So kann beispielsweise über eine Leitung 7 Abgas abgezogen werden und mit abgezweigtem Heißwind, welcher über eine Leitung 8 gemeinsam mit dem Abgas einer Brennkammer 9 zugeführt wird, kann das Abgas einer Nachverbrennung unterzogen werden. Die auf die Art und Weise gewonnene Energie kann zur weiteren Erhitzung des Heißwindes herangezogen werden. Mit 10 ist ein konventioneller wechselweise zum Einsatz gelangender Wärmetauscher bezeichnet.

Das aus dem Wärmetauscher 11 abgezogene mit Kaltluft für die Erzielung von Heißwind abgekühlte verbrannte Abgas der Brennkammer 9 kann bei Temperaturen von unter 200° C über eine Leitung 12 einer konventionellen Gasaufbereitung zugeführt werden, welche schematisch mit 13 bezeichnet ist.

Im Inneren des Konverters 1 wird eine Schlacken-Eisenbadsuspension 14 hergestellt, wobei über Bodendüsen 15 metallurgische Kohle und Stickstoff und über gegebenenfalls mit Schutzgas ummantelte Sauerstoff-Bodendüsen 16 Additive zugeführt werden. Die Additive setzen sich aus $SiO_2$-Trägern 17, $Al_2O_3$-Trägern 18 und Feinerz 19 zusammen, welche jeweils über Zellradschleusen 20 und einen Streckenförderer 21 sowie eine weitere Zellradschleuse 22 in einen Drucksauerstoffstrom eingespeist werden können, wobei die entsprechende Speiseleitung mit 23 bezeichnet ist.

Oberhalb der Schlacken-Eisenbadsuspension 14 wird durch Aufblasen des Heißwindes im Heißwindstrahl eine inverse Flamme erzeugt, wobei zusätzlich auch über die Zellradschleuse 5 $SiO_2$-, $Al_2O_3$- oder FeO-Träger dann aufgegeben werden können, wenn diese mit dem Drucksauerstoffstrahl über die Bodendüsen nicht ohne weiteres pneumatisch förderbar sind.

In Fig. 2 ist eine abgewandelte Ausbildung der Aufgabe für saure Zuschläge zur Absenkung der Basizität dargestellt. Mit 24 ist ein Schmelzzyklon bezeichnet, welchem über eine Leitung 25, welche an die Leitung 7 in Fig. 1 anschließt, die heißen Konverterabgase zugeführt werden. Die heißen Konverterabgase münden hiebei im wesentlichen tangential in den Schmelzzyklon 24, wobei zusätzlich gemeinsam mit den heißen Abgasen, beispielsweise koaxial, Sande und/oder Feinerze sowie ggf. Bauxit in den Schmelzzyklon 24 eingeblasen werden. Über eine Leitung 26 kann Sauerstoff für die Nutzung der chemischen Wärme der heißen Konverterabgase zur Verbrennung der verbleibenden brennbaren Bestandteile der heißen Konverterabgase eingeblasen werden.

Im Schmelzzyklon 24 werden die $SiO_2$-Träger entsprechend erwärmt, wobei dann, wenn die $SiO_2$-Träger aus Feinerzen bestehen oder Eisenoxidträger gemeinsam mit Hütten- oder Gießereisanden zum Einsatz gelangen, unmittelbar eine Schmelze ausgebildet werden kann. Das gereinigte heiße Konverterabgas wird über eine im wesentlichen axiale Leitung 27 aus dem Schmelzzyklon 24 abgezogen. Da diese Abgase nunmehr entstaubt sind, können sie unmittelbar einem Wärmetauscher zugeführt werden.

Die im Schmelzzyklon 24 gebildete Schmelze kann über ein Rohr 28, welches, beispielsweise als barometrisches Tauchrohr ausgebildet sein kann, in eine Schlackenpfanne 29 verbracht werden, in welcher sich flüssige Stahlwerksschlacke befindet. Bei der Umsetzung der sauren Schmelze mit der basischen Stahlschlacke wird zusätzliche Neutralisationswärme frei, wobei gleichzeitig der Schmelzpunkt abgesenkt wird, sodaß eine dünnflüssige und leicht in den nachfolgenden Konverter aufzugebende Schlacken gebildet wird.

Im Rahmen eines Ausführungsbeispieles wurde eine Schlacke mit nachfolgender Schlackenanalyse hergestellt:

| Schlackenanalyse | |
|---|---|
| Komponente | Anteil (%) |
| FeO | 0,576 |
| MnO | 0,019 |
| $SiO_2$ | 33,173 |
| $Al_2O_3$ | 14,943 |
| $TiO_2$ | 1 |
| CaO | 43,317 |
| $Na_2O$ | 0,13 |

(fortgesetzt)

| Schlackenanalyse | |
|---|---|
| Komponente | Anteil (%) |
| $K_2O$ | 0,042 |
| MgO | 3,14 |
| $SO_2$ | 0,418 |

Das flüssige Produkt wurde granuliert und gemahlen.

Wie aus der in Fig. 1 dargestellten schematischen Einrichtung zur Durchführung des Verfahrens ersichtlich, läßt sich die Nettowärmeausbeute durch den Bypass 8 Heißluftstrom zwischen heißem und kaltem Wärmetauscher 10 bzw. 11 bzw. Regenerator noch weiter steigern. Etwa 15 % des Heißwindstromes kann dabei dem jeweils kalten Wärmetauscher zugeführt werden, wobei das aus dem Konverter kommende Abgas, welches Restmengen an CO und $H_2$ enthält, nachverbrannt wird. Die zusätzliche fühlbare Wärme wird über die Wärmetauscher dem Heißwind rückgeführt, wobei die Nach-Nachverbrennung vorteilhafterweise gestuft stattfinden kann. Es können somit Brennkammern periodisch mit Wärmespeichern entlang des Abgasstromes abwechseln. Auf diese Weise können hohe Temperaturspitzen bzw. Wärmestromdichten im Wärmetauscher vermieden werden.

In einem weiteren Ausführungsbeispiel wurden Einsatzstoffe mit nachfolgender Zusammensetzung verwendet:

| Stahlschlacke | |
|---|---|
| Komponente | Anteil (%) |
| Fe | 8 |
| FeO | 17,6 |
| $Fe_2O_3$ | 2,2 |
| $SiO_2$ | 14,1 |
| $Cr_2O_3$ | 0,9 |
| $Al_2O_3$ | 3,2 |
| $P_2O_5$ | 1,3 |
| $TiO_2$ | 1 |
| CaO | 44,3 |
| $Na_2O$ | 0,1 |
| $K_2O$ | 0,03 |
| MgO | 3,5 |

| Schwacherz | |
|---|---|
| Komponente | Anteil (%) |
| $SO_3$ | 0,05 |
| $H_2O$ | 3,3 |
| $SiO_2$ | 5,4 |
| $Al_2O_3$ | 3 |
| $P_2O_5$ | 0,3 |
| $Fe_2O_3$ | 82,8 |
| MnO | 0,1 |
| CaO | 0,2 |
| MgO | 0,1 |

Als Zielschlacke wurde unter Verwendung des oben beschriebenen Schwacherzes eine Schlacke mit nachfolgender Zusammensetzung

| Schlacke (1500° C) | |
|---|---|
| Komponente | Anteil (%) |
| FeO | 2,6 |
| MnO | 0,3 |
| $SiO_2$ | 32,3 |
| $Cr_2O_3$ | 0,05 |
| $Al_3O_3$ | 12,5 |
| $P_2O_5$ | 0,09 |
| $TiO_2$ | 0,74 |
| CaO | 32,3 |
| $Na_2O$ | 0,14 |
| $K_2O$ | 0,07 |
| MgO | 2,6 |
| $SO_3$ | 0,9 |
| $CaO / SiO_2$ | 1 |

mit einer Basizität $CaO / SiO_2$ von etwa 1 hergestellt. Gleichzeitig wurde ein Roheisen mit der nachfolgenden Richtanalyse

| Eisen (1500° C) | |
|---|---|
| Komponente | Anteil (%) |
| C | 4,5 |
| Mn | 0,2 |
| Cr | 0,16 |
| P | 0,27 |
| S | 0,08 |
| Fe | Rest |

gebildet. Zur Erzielung der geforderten Basizität wurde ein Teil Stahlschlacke mit etwa 4 Teilen des genannten Schwacherzes vermischt, wobei das Schwacherz zuvor in einem Schmelzzyklon geschmolzen wurde. Der gewünschte $Al_2O_3$-Gehalt wurde durch Einblasen von Bauxit in den Konverter eingestellt.

Wie oben erwähnt, kann die Menge an Schwacherzen durch Einsatz weiterer $SiO_2$-Träger, wie beispielsweise von Sand, verringert werden, wobei die Zugabe von Feinerzen zu $SiO_2$-Sanden den Schmelzbereich drastisch durch die Fayalitbildung absenken. Für die Absenkung des Schmelzpuntes von etwa 2000° C von $SiO_2$-Sanden auf etwa 1200° C durch Ausbildung einer Fayalitschlacke genügt prinzipiell eine Zugabe von etwa 20 Gew.% Eisenoxid auf reinen Sand ($SiO_2$).

Die benötigte Schmelzwärme im Schmelzzyklon fällt aufgrund der relativ hohen fühlbaren Wärmemenge der Konverterabgase bei 1700° C sowie aufgrund des Umstandes, daß noch eine relativ hohe chemische Wärmemenge (ca. 20 % CO und $H_2$) in den Konverterabgasen enthalten ist, an. Einbringen und Verbrennen dieser Konverterabgase führt zur Ausbildung Fayalitschlacke im Schmelzzyklon, wobei weitere Wärme durch die Neutralisation in der nachfolgenden Stahlpfanne freigesetzt wird. Diese nicht unerhebliche Wärmemenge führt zu einer optimalen Verflüssigung und Homogenisierung der gebildeten Mischschlacke. Gleichzeitig wird der Staubanteil des sehr staubhaltigen Konverterabgases in die Schmelze eingebunden und somit das Konverterabgas entstaubt. Mit der Restwärme kann über einen entsprechenden Wärmeaustauscher beispielsweise Heißwind für den Konverter vorgewärmt werden.

**Patentansprüche**

1. Verfahren zur wirtschaftlichen Verwertung und Entsorgung von Hüttenreststoffen zur Gewinnung von Roheisen und umweltverträglichen Schlacken mit einer Basizität $CaO/SiO_2$ zwischen 1,0 und 1,8, wobei Stahlschlacken, wie z.B. Konverterschlacken, Elektroofenschlacken, Edelstahlschlacken und schwer verwertbare Eisenträger, wie z.B. Feinerz, bei der Stahlherstellung anfallenden Stäube und Walzwerkzunder, sowie $SiO_2$-Träger und/oder $Al_2O_3$-Träger, wie z.B. Gießereisande, aluminiumoxidhaltigen Schleifstäube und bei der Bauxitgewinnung nach dem Bayer-Verfahren anfallenden Rotschlämme, in einen Konverter, in welchem ein Eisenbad vorgelegt wird, eingebracht werden, das Volumen-Verhältnis von geschmolzener Schlacke zum Eisenbad größer als 0,5:1 gewählt wird, in den Schlacken ein $Al_2O_3$-Gehalt zwischen 10 und 25% bezogen auf die Gesamtschlacke und eine Schlackenbasizität ($CaO/SiO_2$) zwischen 1,0 und 1,8 durch Zusetzen von $SiO_2$-Trägern, wie z.B. Gießereisanden, Hüttensanden und/ oder Feinerzen, eingestellt werden, und dass zur intensiven Durchmischung von Schlacke und Eisenbad Heißwinde auf die Schlacke aufgeblasen und Kohle durch das Eisenbad durchgeblasen wird.

2. Verfahren nach Anspruch 1, **dadurch gekennzeichnet, dass** das Volumen-Verhältnis geschmolzene Schlacke zu Eisenbad 0,8:1 bis 1,5:1 gewählt wird.

3. Verfahren nach Anspruch 1 oder 2, **dadurch gekennzeichnet, dass** den Schlacken $SiO_2$-Träger, wie z.B. Gießereisande, Hüttensande und/oder Feinerze zur Einstellung einer Schlackenbasizität ($CaO/SiO_2$) zwischen 1,2 und 1,8 bei einem $Al_2O_3$-Gehalt zwischen 10 und 25 Gew.%, bezogen auf die Schlacke, zugesetzt wird.

4. Verfahren nach Anspruch 1, 2 oder 3, **dadurch gekennzeichnet, dass** die Kohle gemeinsam mit Inertgas, insbesondere mit Stickstoff, durch das Eisenbad hindurchgeblasen wird.

5. Verfahren nach einem der Ansprüche 1 bis 4, **dadurch gekennzeichnet, daß** weiters Sauerstoff oder Heißluft durch das Eisenbad hindurchgeblasen wird.

6. Verfahren nach einem der Ansprüche 1 bis 5, **dadurch gekennzeichnet, dass** die Schlackenbasizität auf 1,3 bis 1,6 ein-gestellt wird.

7. Verfahren nach einem der Ansprüche 1 bis 6, **dadurch gekennzeichnet, daß** die Schmelzbadhöhe wenigstens dem 20fachen, vorzugsweise dem 30 bis 60fachen, der Unterbaddüsendurchmesser entspricht.

8. Verfahren nach einem der Ansprüche 1 bis 7, **dadurch gekennzeichnet, daß** die Heißwindgeschwindigkeit zwischen 0,4 und 0,8 Mach gewählt wird.

9. Verfahren nach einem der Ansprüche 1 bis 8, **dadurch gekennzeichnet, daß** die Schlacken unter Ausbildung eines Glasgehaltes von mehr als 90 %, vorzugsweise mehr als 93 % granuliert werden.

10. Verfahren nach einem der Ansprüche 1 bis 9, **dadurch gekennzeichnet, daß** Kohle in einer Menge von 60 bis 350 kg/t Schlacke gemeinsam mit 6 bis 9 $Nm^3$/t Schlacke Stickstoff als Trägergas sowie 25 bis 100 $Nm^3$/t Schlacke Sauerstoff gegebenenfalls gemeinsam mit Kohlenwasserstoffen zum Schutz der Düsen durch das Bad hindurchgeleitet werden.

11. Verfahren nach Anspruch 10, **dadurch gekennzeichnet, daß** die Gase unter einem Druck von 5 bis 10 bar zugeführt werden, wobei $N_2$ mit höherem Druck, insbesondere 7 bis 10 bar als $O_2$ und Kohlenwasserstoffe, wie z.B. Erdgas, eingesetzt wird.

12. Verfahren nach einem der Ansprüche 1 bis 11, **dadurch gekennzeichnet, daß** Heißwind unter einem Druck von 0,8 bis 1,2 bar gegebenenfalls gemeinsam mit Kaltwind in Mengen von 400 bis 1200 $Nm^3$/t Schlacke über Lanzen aufgeblasen wird.

13. Verfahren nach einem der Ansprüche 1 bis 12, **dadurch gekennzeichnet, daß** die Konverterabgastemperatur auf 1600 bis 1800° C, vorzugsweise 1650° bis 1750° C, geregelt wird.

14. Verfahren nach einem der Ansprüche 1 bis 13, **dadurch gekennzeichnet, daß** Feinerze in Mengen von 200 bis 1500 kg/t Stahlschlacke aufgegeben werden.

15. Verfahren nach einem der Ansprüche 1 bis 14, **dadurch gekennzeichnet, daß** die Schlackenbasizität der Stahlschlacke in einer dem Konverter mit dem Eisenbad vorgeschalteten Pfanne abgesenkt wird.

16. Verfahren nach einem der Ansprüche 1 bis 15, **dadurch gekennzeichnet, daß** die für die Absenkung der Basizität erforderlichen $SiO_2$-Träger, wie z.B. Gießereisande, Hüttensande und/oder Feinerzen, in einem Schmelzzyklon mit den Konverterabgasen unter gleichzeitiger Reinigung der Konverterabgase erhitzt werden.

**17.** Verfahren nach einem der Ansprüche 1 bis 16, **dadurch gekennzeichnet, daß** dem Schmelzzyklon mit den $SiO_2$-Trägern Feinerze bzw. $Fe_xO_y$-Träger zur Ausbildung fayalitischer Schlacken zugesetzt werden und die gebildete Schmelze mit der Schlackenschmelze vor Aufgabe in den Konverter vermischt wird.

**18.** Verfahren nach einem der Ansprüche 1 bis 17, **dadurch gekennzeichnet, daß** der CO-Gehalt der Konverterabgase im Schmelzzyklon verbrannt wird.

**19.** Verfahren nach einem der Ansprüche 1 bis 18, **dadurch gekennzeichnet, daß** dem Schmelzzyklon $Al_2O_3$-Trager, wie Bauxit und/oder Hüttenstäube aufgegeben werden.

**20.** Verfahren nach einem der Ansprüche 1 bis 19, **dadurch gekennzeichnet, daß** das Metallbad des Konverters abgezogen und gesondert unter reduzierenden Bedingungen mittels CaO, $CaC_2$, metallischem Magnesium, metallischem Kalzium und/oder $CaF_2$ entphosphort wird.

## Claims

**1.** A method for economically utilizing, and disposing of, metallurgical residues to recover pig iron and environmentally compatible slags having $CaO/SiO_2$ basicities ranging between 1.0 and 1.8, wherein steel slags such as, e.g., converter slags, electric furnace slags, stainless steel slags, and hardly utilizable iron carriers such as, e.g., fine ores, dusts and mill scales occurring in the production of steel, as well as $SiO_2$ carriers and/or $Al_2O_3$ carriers such as, e.g., foundry sands, aluminium oxide-containing grinding dusts and red mud occurring in the extraction of bauxite according to the Bayer method, are introduced into a converter already containing an iron bath, the volume ratio of molten slag to iron bath is chosen to be larger than 0.5:1, an $Al_2O_3$ content of between 10 and 25%, based on the overall slag, and a slag basicity ($CaO/SiO_2$) of between 1.0 and 1.8 are adjusted in the slag by adding $SiO_2$ carriers such as, e.g., foundry sands, metallurgical sands and/or fine ores, and hot blasts are top-blown onto the slag, and coal is blown through the iron bath, to thoroughly mix the slag and iron bath.

**2.** A method according to claim 1, **characterized in that** the volume ratio of molten slag to iron bath is chosen to range between 0.8:1 and 1.5:1.

**3.** A method according to claim 1 or 2, **characterized in that** $SiO_2$ carriers such as, e.g., foundry sands, metallurgical sands and/or fine ores are added to the slag to adjust a slag basicity ($CaO/SiO_2$) of between 1.2 and 1.8 at an $Al_2O_3$ content of between 10 and 25%, based on the slag.

**4.** A method according to claim 1, 2 or 3, **characterized in that** the coal is blown through the iron bath along with an inert gas and, in particular, nitrogen.

**5.** A method according to any one of claims 1 to 4, **characterized in that** oxygen or hot air is further blown through the iron bath.

**6.** A method according to any one of claims 1 to 5, **characterized in that** the slag basicity is adjusted to between 1.3 and 1.6.

**7.** A method according to any one of claims 1 to 6, **characterized in that** the height of the melt bath corresponds to at least 20 times and, preferably 30 to 60 times the diameter of the submerged tuyeres.

**8.** A method according to any one of claims 1 to 7, **characterized in that** the hot blast velocity is chosen to range between 0.4 and 0.8 Mach.

**9.** A method according to any one of claims 1 to 8, **characterized in that** the slags are granulated while forming glass contents of more than 90% and, preferably, more than 93%.

**10.** A method according to any one of claims 1 to 9, **characterized in that**, for the protection of the tuyeres, coal is passed through the bath in an amount ranging from 60 to 350 kg/ton slag along with 6 to 9 $Nm^3$/ton slag of nitrogen as a carrier gas as well as 25 to 100 $Nm^3$/ton slag of oxygen, optionally along with hydrocarbons.

**11.** A method according to claim 10, **characterized in that** the gases are fed at a pressure of 5 to 10 bar, with $N_2$ being

used at a higher pressure, particularly 7 to 10 bar, than $O_2$ and hydrocarbons such as, e.g., natural gas.

12. A method according to any one of claims 1 to 11, **characterized in that** hot blast is top-blown through lances at a pressure of between 0.8 to 1.2 bar, optionally along with cold blast, in amounts of from 400 to 1200 $Nm^3$/ton slag.

13. A method according to any one of claims 1 to 12, **characterized in that** the temperature of the converter exhaust gases is controlled at 1600° to 1800°C and, preferably, 1650° to 1750°C.

14. A method according to any one of claims 1 to 13, **characterized in that** fine ores are charged in amounts ranging from 200 to 1500 kg/ton steel slag.

15. A method according to any one of claims 1 to 14, **characterized in that** the slag basicity of the steel slag is lowered in a ladle arranged to precede the converter containing the iron bath.

16. A method according to any one of claims 1 to 15, **characterized in that** the $SiO_2$ carriers such as, e.g., foundry sands, metallurgical sands and/or fine ores, which are required to lower the basicity, are heated in a melting cyclone by the converter exhaust gases while simultaneously purifying said converter exhaust gases.

17. A method according to any one of claims 1 to 16, **characterized in that** fine ores and/or $Fe_xO_y$ carriers are added to the $SiO_2$ carrier-containing melting cyclone to form fayalitic slags, and the thus formed melt is mixed with the slag melt prior to being charged into the converter.

18. A method according to any one of claims 1 to 17, **characterized in that** the CO content of the converter exhaust gases is burned in the melting cyclone.

19. A method according to any one of claims 1 to 18, **characterized in that** $Al_2O_3$ carriers such as bauxite and/or metallurgical dusts are charged into the melting cyclone.

20. A method according to any one of claims 1 to 19, **characterized in that** the metal bath of the converter is drawn off and separately dephosphorized under reducing conditions using CaO, $CaC_2$, metallic magnesium, metallic calcium and/or $CaF_2$.

**Revendications**

1. Procédé pour la valorisation économique et l'élimination de sous-produits métallurgiques en vue de l'obtention de fonte brute et de laitiers compatibles avec l'environnement ayant une basicité $CaO/SiO_2$ entre 1,0 et 1,8, selon lequel des laitiers d'acier, comme par exemple des laitiers de convertisseur, des laitiers de four électrique, des laitiers d'aciers spéciaux et des porteurs de fer difficilement valorisables, comme par exemple des fines de minerai, des poussières produites lors de la fabrication d'acier et des pailles, ainsi que des porteurs de $SiO_2$ et/ou des porteurs d'$Al_2O_3$, comme par exemple des sables de fonderie, des poussières de meulage renfermant de l'alumine et des boues rouges produites lors de l'obtention de bauxite selon le procédé Bayer, sont introduits dans un convertisseur dans lequel un bain de fer est présent, le rapport volumique du laitier fondu au bain de fer est choisi supérieur à 0,5:1, une teneur en $Al_2O_3$ entre 10 et 25%, rapportée à la totalité du laitier, et une basicité de laitier ($CaO/SiO_2$) entre 1,0 et 1,8 sont ajustées dans les laitiers par addition de porteurs de $SiO_2$, comme par exemple des sables de fonderie, des sables métallurgiques et/ou des fines de minerai, et pour assurer un mélange intense en profondeur du laitier et du bain de fer, des vents chauds sont soufflés sur le laitier et du charbon est insufflé à travers le bain de fer.

2. Procédé selon la revendication 1, **caractérisé en ce que** le rapport volumique du laitier fondu au bain de fer est choisi égal à une valeur de 0,8:1 à 1,5:1.

3. Procédé selon la revendication 1 ou 2, **caractérisé en ce qu'**aux laitiers sont ajoutés des porteurs de $SiO_2$, comme par exemple des sables de fonderie, des sables métallurgiques et/ou des fines de minerai, pour l'ajustement d'une basicité de laitier ($CaO/SiO_2$) entre 1,2 et 1,8, pour une teneur en $Al_2O_3$ entre 10 et 25% en poids rapportée au laitier.

4. Procédé selon la revendication 1, 2 ou 3, **caractérisé en ce que** le charbon est insufflé à travers le bain de fer conjointement avec un gaz inerte, en particulier avec de l'azote.

**5.** Procédé selon l'une des revendications 1 à 4, **caractérisé en ce que** de l'oxygène ou de l'air chaud est en plus insufflé à travers le bain de fer.

**6.** Procédé selon l'une des revendications 1 à 5, **caractérisé en ce que** la basicité de laitier est ajustée à une valeur de 1,3 à 1,6.

**7.** Procédé selon l'une des revendications 1 à 6, **caractérisé en ce que** la hauteur du bain de matière en fusion correspond à au moins 20 fois, de préférence à 30 à 60 fois, le diamètre des buses du fond du bain.

**8.** Procédé selon l'une des revendications 1 à 7, **caractérisé en ce que** la vitesse des vents chauds est choisie entre Mach 0,4 et Mach 0,8.

**9.** Procédé selon l'une des revendications 1 à 8, **caractérisé en ce que** les laitiers sont mis en granulés moyennant l'établissement d'une teneur en verre de plus de 90%, de préférence de plus de 93%.

**10.** Procédé selon l'une des revendications 1 à 9, **caractérisé en ce qu'**à travers le bain, sont acheminés, pour la protection des buses, du charbon dans une proportion de 60 à 350 kg/t de laitier, conjointement avec de l'azote en tant que gaz porteur, à raison de 6 à 9 $Nm^3$/t de laitier, ainsi que de l'oxygène à raison de 25 à 100 $Nm^3$/t de laitier, le cas échéant conjointement avec des hydrocarbures.

**11.** Procédé selon la revendication 10, **caractérisé en ce que** les gaz sont appliqués sous une pression de 5 à 10 bars, $N_2$ étant mis en oeuvre à une pression plus élevée, en particulier une pression de 7 à 10 bars, que $O_2$ et les hydrocarbures, comme par exemple du gaz naturel.

**12.** Procédé selon l'une des revendications 1 à 11, **caractérisé en ce que** du vent chaud est soufflé, au moyen de lances, sous une pression de 0,8 à 1,2 bar, le cas échéant conjointement avec du vent froid dans des proportions de 400 à 1200 $Nm^3$/t de laitier.

**13.** Procédé selon l'une des revendications 1 à 12, **caractérisé en ce que** la température des effluents gazeux du convertisseur est réglée à une valeur de 1600 à 1800°C, de préférence 1650° à 1750°C.

**14.** Procédé selon l'une des revendications 1 à 13, **caractérisé en ce que** des fines de minerai sont chargées dans des proportions de 200 à 1500 kg/t de laitier d'acier.

**15.** Procédé selon l'une des revendications 1 à 14, **caractérisé en ce que** la basicité du laitier d'acier est abaissée dans une poche placée en amont du convertisseur renfermant le bain de fer.

**16.** Procédé selon l'une des revendications 1 à 15, **caractérisé en ce que** les porteurs de $SiO_2$ nécessaires pour l'abaissement de la basicité, comme par exemple des sables de fonderie, des sables métallurgiques et/ou des fines de minerai, sont chauffés dans un cyclone à matière fondue, à l'aide des effluents gazeux du convertisseur, avec épuration simultanée des effluents gazeux du convertisseur.

**17.** Procédé selon l'une des revendications 1 à 16, **caractérisé en ce que** des fines de minerai ou des porteurs de $Fe_xO_y$ sont ajoutés dans le cyclone à matière fondue contenant les porteurs de $SiO_2$, en vue de la formation de laitiers fayalitiques, et la masse fondue produite est mélangée à la masse fondue de laitier avant d'être chargée dans le convertisseur.

**18.** Procédé selon l'une des revendications 1 à 17, **caractérisé en ce que** la teneur en CO des effluents gazeux du convertisseur est brûlée dans le cyclone à matière fondue.

**19.** Procédé selon l'une des revendications 1 à 18, **caractérisé en ce que** des porteurs de $Al_2O_3$, tels que de la bauxite et/ou des poussières métallurgiques, sont chargés dans le cyclone à matière fondue.

**20.** Procédé selon l'une des revendications 1 à 19, **caractérisé en ce que** le bain de métal du convertisseur est soutiré et est déphosphoré séparément, sous des conditions réductrices, au moyen de CaO, de $CaC_2$, de magnésium métallique, de calcium métallique et de $CaF_2$.

Fig.1

Fig.2

15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 9600019 W